# EUROPEAN PATENT APPLICATION

(11) **EP 4 307 190 A1**
(43) Date of publication of application: **17.01.2024**
(21) Application number: 22901525.0
(22) Date of filing: 21.09.2022
(51) Int. Cl.: G06Q 10/06, G06Q 10/08, G06Q 50/04

(54) **APPARATUS AND METHOD FOR ESTABLISHING PRODUCTION PLAN**

(30) Priority: 30.11.2021 KR 20210169583
(71) Applicant: LG Energy Solution, Ltd., Seoul 07335 (KR)
(72) Inventor: LEE, Youngjae, Daejeon 34122 (KR)
(74) Representative: Hoffmann Eitle
(86) International application number: PCT/KR2022/014086
(87) International publication number: WO 2023/101165

(57) **Abstract**

A production planning apparatus and method according to embodiments of the present invention may obtain at least one piece of information related to production of a product, create a simulation model to which the digital twin technology is applied, and establish a production plan for each unit process for the production of the product based on the at least one piece of information, and may execute a simulation according to the production plan using the simulation model and analyze the result data from the simulation to verify and optimize the production plan, thereby providing an apparatus and a method for establishing a production plan with low-cost, high-efficiency, and high-reliability that minimizes an amount of work-in-progress between each process, minimizes a waiting time of the work-in-progress, and minimizes a possibility of quality defect occurrence.

## Description

### [Technical Field]

This application claims priority to and the benefit of Korean Patent Application No.10-2021-0169583 filed in the Korean Intellectual Property Office on November 30, 2021, the entire contents of which are incorporated herein by reference.

The present invention relates to an apparatus and a method for establishing a production plan, and more particularly, to an apparatus and a method for establishing a production plan using a simulation model to which digital twin is applied.

### [Background Art]

In general, when a product is produced through a manufacturing process, a daily production plan is manually established by a manager manually checking and converting at least one piece of data related to product production.

Accordingly, when changes such as production disruption or quantity change occur in a unit process of a product, since the manager must recollect change data of the entire production system due to the change in the unit process and revise the production plan, it is difficult to process quickly and elaborately, leading to a decrease in efficiency.

Thus, in the prior art, an amount of work-in-progress between unit processes is provided as a buffer to compensate for an instance that a production volume per line of the process is different.

Thus, at a production site, an endeavor to secure more work-in-progress quantities than necessary is made to resolve the uncertainty caused by manual production planning.

However, when providing more than an appropriate amount of work-in-progress, unnecessary lead time occurs in the production process and additional space is required to store the work-in-progress, resulting in an increase in cost.

In addition, when storage space is limited, if more than an appropriate amount of work in progress occurs, problems may arise in a logistics operation due to excess stock capacity and a low operation rate of automated guided vehicles (AGVs), resulting in additional costs.

### [Detailed Description of the Invention]

### [Technical Problem]

In order to solve the problem, an object of the present invention is to provide an apparatus for establishing a production plan with low-cost, high-efficiency, and high-reliability.

In order to solve the problem, the other object of the present invention is to provide a method for establishing a production plan with low-cost, high-efficiency, and high-reliability.

### [Technical Solution]

In order to achieve the objective of the present disclosure, an apparatus for establishing a plan for producing a product may comprise at least one processor; and a memory configured to store at least one instruction executed by the at least one processor, wherein the at least one instruction includes an instruction to obtain at least one piece of information related to a production of the product and to generate a simulation model to which digital twin technology is applied; an instruction to establish a production plan for each unit process for the production of the product based on the at least one piece of information; an instruction to perform a simulation according to the production plan using the simulation model; and an instruction to analyze result data according to the simulation to verify and optimize the production plan.

The at least one piece of information may include at least one of production data information obtained from a production system of the product, process facility information for manufacturing the product, and logistics facility information for transporting the product.

The instruction to analyze result data according to the simulation to verify and optimize the production plan may include an instruction to analyze a trend of an amount of a work in progress provided for each unit process for manufacturing the product based on the result data; an instruction to analyze a real-time operation rate of at least one facility for each unit process; an instruction to analyze a logistics flow of the work in progress in consideration of the real-time operation rate of the facilities for each unit process; and an instruction to obtain an optimized production plan based on an analysis result.

At least one instruction may be re-executed based on changed information in the instance that the at least one piece of information is changed by a user.

The simulation model may receive and update a changed state information in real time in an instance that at least one piece of state information is changed by a user.

The instruction to obtain an optimized production plan based on the analysis result may include an instruction to obtain the optimized production plan in an instance that a simulation result according to the production plan turns out that the production plan minimizes an amount of work-in-progress required to prepare for an issue of defect occurrence for each unit process and minimizes a waiting time for a process of the work-in-progress.

The production plan of the product may include a production plan of a battery.

According to another embodiment of the present disclosure, a method for establishing a plan for producing a product may comprise: obtaining at least one piece of information related to a production of the product and generating a simulation model to which digital twin technology is applied; establishing a production plan for each unit process for the production of the product based on the at least one piece of information; performing a simulation according to the production plan using the simulation model; and analyzing result data according to the simulation to verify and optimize the production plan.

The at least one piece of information may include at least one of production data information obtained from a production system of the product, process facility information for manufacturing the product, and logistics facility information for transporting the product.

The analyzing result data according to the simulation to verify and optimize the production plan may include: analyzing a trend of an amount of a work in progress provided for each unit process for manufacturing the product based on the result data; analyzing a real-time operation rate of at least one facility for each unit process; analyzing a logistics flow of the work in progress in consideration of the real-time operation rate of at least one facility for each unit process; and obtaining an optimized production plan based on an analysis result.

The obtaining at least one piece of information, the establishing a production plan, the performing a simulation, and the analyzing simulation result data may be re-executed based on changed information in an instance that the at least one piece of information is changed by a user.

The simulation model may receive and update a changed state information in real time in an instance that at least one piece of state information is changed by a user.

The obtaining an optimized production plan based on the analysis result may include obtaining the optimized production plan in an instance that a simulation result according to the production plan turns out that the production plan minimizes an amount of a work-in-progress required to prepare for an issue of defect occurrence for each unit process and minimizes a waiting time for a process of the work-in-progress.

The production plan of the product may include a production plan of a battery.

### [Advantageous Effects]

According to embodiments of the present disclosure, a production planning apparatus and method according to embodiments of the present invention may obtain at least one piece of information related to production of a product, create a simulation model to which the digital twin technology is applied, and establish a production plan for each unit process for the production of the product based on the at least one piece of information, and may execute a simulation according to the production plan using the simulation model and analyze the result data from the simulation to verify and optimize the production plan, thereby providing an apparatus and a method for establishing a production plan with low-cost, high-efficiency, and high-reliability that reduces an amount of work-in-progress between each process, minimizes a waiting time of the work-in-progress, and minimizes a possibility of quality defect occurrence.

### [Brief Description of the Drawings]

FIG. 1 is a conceptual diagram for explaining a conventional planning process of producing a product.
FIG. 2 is a conceptual diagram of an apparatus for establishing a production plan according to embodiments of the present invention.
FIG. 3 is a block diagram of an apparatus for establishing a production plan according to embodiments of the present invention.
FIG. 4 is a operational flowchart of a method for establishing a production plan according to embodiments of the present invention.

100: memory
200: processor
300: tranceiver
400: input interface
500: output interface
600: storage device
700: bus

### [Best Mode]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

Terms used in the present application are used only to describe specific embodiments, and are not intended to limit the present invention. A singular form includes a plural form if there is no clearly opposite meaning in the context. In the present application, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

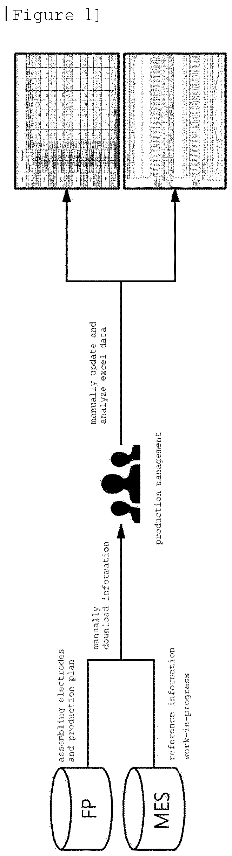

FIG. 1 is a conceptual diagram for explaining a conventional planning process of producing a product.

Referring to FIG. 1, a conventional product production plan used to be manually established by a production manager.

More specifically, in the related art, a production manager manually obtains at least one piece of information for each unit process from at least one production system. For example, a production manager manually obtains information such as at least one history or work-in- progress from at least one production system. Here, work-in-progress is a product in a process of manufacturing and may be a semi-finished product waiting between processes.

Thereafter, the production manager inputs at least one piece of acquired information into a computer, analyzes the at least one piece of acquired information, calculates progress of a production volume and work-in-progress, and establishes a production plan of a product.

However, conventional production planning methods are difficult to reflect variables generated in unit processes of a product in real time. Here, the variable is an event that occurs according to a probability, and may mean, for example, in a case of a battery manufacturing process, occurrences of a winding amount and a defect that occur in a unit process.

In other words, the conventional method of establishing a production plan set by a production manager is difficult to reflect real-time data due to occurrence of variables, and thus has a limitation that reduces reliability.

In addition, in a case of work-in-progress, which is stored for use as a countermeasure against a variable occurrence, when equipped with an amount more than appropriate, waste of space and cost causes a decrease in efficiency.

Therefore, the present invention provides a simulation model using digital twin technology to dynamically establish and verify an optimal production plan for product production, and thus, presents an apparatus and a method for establishing a production plan with low-cost, high-efficiency, and high-reliability that analyzes a logistics flow and presents a proper amount of work-in-progress.

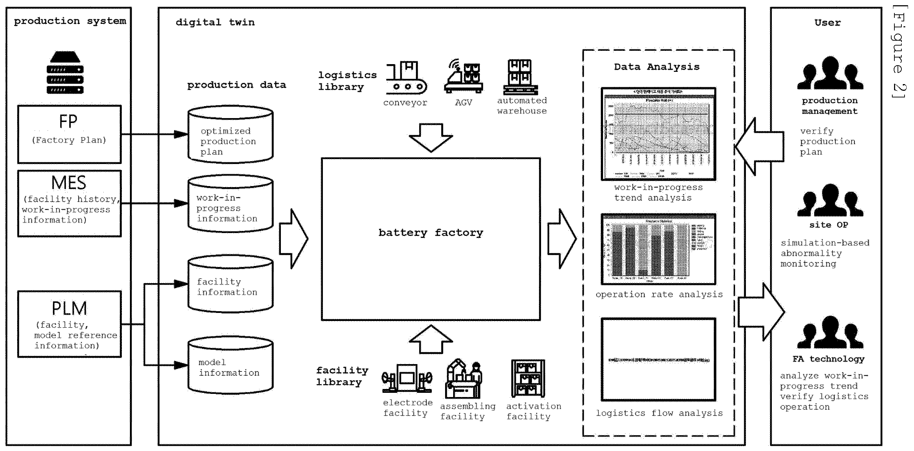

FIG. 2 is a conceptual diagram of an apparatus for establishing a production plan according to embodiments of the present invention.

Referring to FIG. 2, the apparatus for establishing a production plan according to embodiments of the present invention may provide an optimal production plan during product production using a simulation model. For example, the apparatus for establishing a production plan may be used in a battery manufacturing process.

Here, the simulation model may be a model in which a manufacturing environment of a product is simulated under the same conditions as a real present environment using digital twin technology.

According to an embodiment, the apparatus for establishing a production plan may build a simulation model by receiving at least one piece of information from the outside. Here, the at least one piece of information may be production data information, process facility information, logistics facility information, and etc. that are actually used for manufacturing a corresponding product in reality.

According to an embodiment, the production data information may be information acquired from an actual manufacturing system. For example, the production data information may include Factory Plan information for each unit process, Manufacturing Execution System (MES) information including history of at least one process facility and work-in-progress information for each unit process, and Product Lifecycle Management (PLM) information including basic information such as facility settings and model information. For example, in the apparatus for establishing a production plan according to embodiments of the present invention, a simulation model to which digital twin technology is applied and a production system may be dynamically connected in real time. Accordingly, when at least one production data of the production system is changed by a user, the changed information may be reflected in the simulation model in real time.

In addition, the process facility information may include at least one facility used for each unit process for manufacturing a product. For example, in a case of a battery manufacturing process, the process facility information may include information about a facility for forming electrodes, a facility for assembling a battery, and a facility for charging or discharging to activate a battery.

In addition, the logistics facility information may include facility information about such as a conveyor device for transporting products, an automated guided vehicle (AGV), and an automated warehouse.

Thereafter, the apparatus for establishing a production plan according to the embodiment of the present invention may perform simulation according to the production plan using a simulation model in which at least one piece of information is reflected.

Then, the apparatus for establishing a production plan according to the embodiment of the present invention may analyze the simulation data.

According to an embodiment, the apparatus for establishing a production plan may analyze in real time a trend in work-in-progress required between each unit process in terms of logistics flow. For example, it is possible to analyze whether the amount of work-in-process production in the previous process and the amount of work-in-process consumption (defect generation amount) in the subsequent process match.

According to another embodiment, the apparatus for establishing a production plan may analyze real-time operating rates of unit process facilities.

According to another embodiment, the apparatus for establishing a production plan may analyze the flow of logistics from logistics facility information.

Accordingly, the apparatus for establishing a production plan according to embodiments of the present invention may establish an optimized production plan considering not only real-time production data of products, but also real-time status information of process facilities and logistics facilities.

In addition, the apparatus for establishing a production plan may verify and analyze the production plan to analyze a state of a space required for extra work-in-progress loading and a flow of logistics.

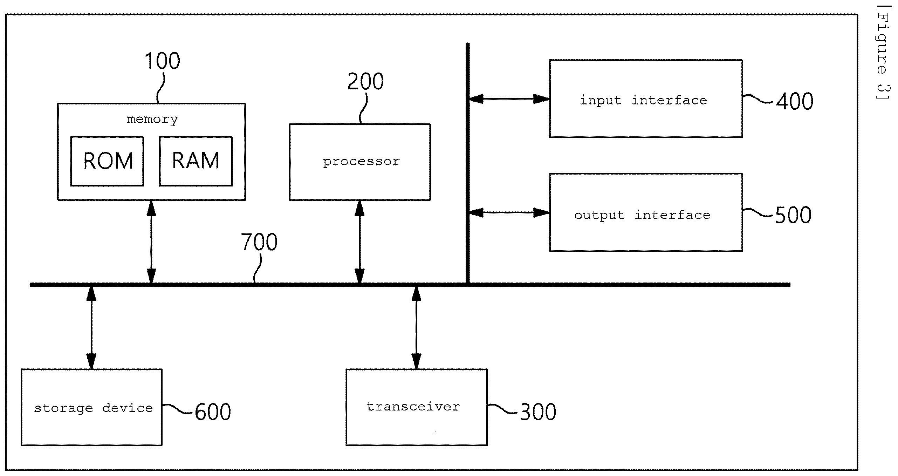

FIG. 3 is a block diagram of an apparatus for establishing a production plan according to embodiments of the present invention.

Referring to FIG. 3, a production planning apparatus may include a memory 100, a processor 200, a transceiver 300, an input interface 400, an output interface 500, and a storage device 600.

According to an embodiment, each of the components 100, 200, 300, 400, 500, and 600 included in the apparatus for establishing a production plan may be connected by a bus 700 to communicate with each other.

Among the components 100, 200, 300, 400, 500, and 600, the memory 100 and the storage device 600 may include at least one of a volatile storage medium and a non-volatile storage medium. For example, the memory 100 and the storage device 600 may include at least one of a read only memory (ROM) and a random access memory (RAM).

Among them, the memory 100 may include at least one command or instruction executed by the processor 200.

According to embodiments, the at least one instruction may include an instruction to obtain at least one piece of information related to a production of the product and to generate a simulation model to which digital twin technology is applied; an instruction to establish a production plan for each unit process for the production of the product based on the at least one piece of information; an instruction to perform a simulation according to the production plan using the simulation model; and an instruction to analyze result data according to the simulation to verify and optimize the production plan.

The processor 200 may mean a central processing unit (CPU), a graphics processing unit (GPU), or a dedicated processor on which methods according to embodiments of the present invention are performed.

As described above, the processor 200 may execute at least one program command stored in the memory 100.

Furthermore, the output interface 500 may output at least one result data analyzed by a simulation device.

Accordingly, the apparatus for establishing a production plan according to embodiments of the present invention may provide customized analysis information to a user using the apparatus for establishing a production plan.

According to one embodiment, a user who is in charge of production management can obtain optimal production plan information.

According to another embodiment, a user in charge of on-site facilities may obtain simulation-based abnormality monitoring information and prevent anomalies in actual facilities from occurring based on the abnormality monitoring information.

According to another embodiment, a user in charge of production analysis may obtain a result of analyzing a trend in work-in-progress and use it as verification data for logistics operation.

The apparatus for establishing a production plan according to embodiments of the present invention has been described above. Hereinafter, a method for establishing a production plan performed by a process operation of the apparatus for establishing a production plan will be described.

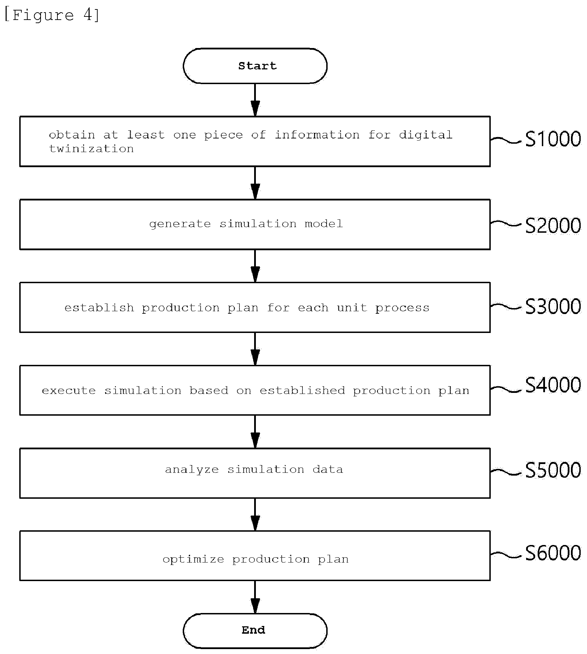

FIG. 4 is a operational flowchart of a method for establishing a production plan according to embodiments of the present invention.

Referring to FIG. 4, the processor 200 in the apparatus for establishing a production plan according to embodiments of the present invention may obtain at least one piece of information for digital twinization from the outside (S1000).

According to an embodiment, the at least one piece of information may include production data information obtained from a production system, process facility information, and logistics facility information.

Thereafter, the processor 200 may generate a simulation model to which digital twin technology is applied based on at least one piece of information obtained (S2000). Here, the simulation model may be a virtual factory model applied with digital twin technology having an environment similar to a manufacturing factory that produces actual products.

Thereafter, the processor 200 may establish a production plan for each unit process based on the production data information, the process facility information, and the logistics facility information using the simulation model (S3000).

The processor 200 may execute a simulation based on the established production plan (S4000).

Thereafter, the processor 200 may analyze simulation result data to verify the production plan (S5000) .

More specifically describing the method of analyzing the simulation result data, the processor 200 may analyze a trend of work-in-progress for each unit process based on the simulation result data and visualize it through an output interface device. For example, the processor 200 may identify, analyze, and visualize a production volume and a defective quantity of work-in-progress for each unit process.

Then, the processor 200 may analyze a real-time operation rate of facilities for each unit process. Accordingly, the processor 200 may analyze a logistics flow of the work-in-progress in consideration of the real-time operation rate of the facilities.

Thereafter, the processor 200 may obtain an optimized production plan using a simulation of the production plan based on the analysis result, wherein the optimized production plan may satisfy a proper amount of work-in-progress with a proper a ratio of production volume of work-in-progress and defective quantity occurring before and after the process, space for loading work-in-progress having minimum surplus, and minimization of lead time of the work-in-progress (S6000).

Meanwhile, when at least one state information of production data information, process facility information, and logistics facility information is changed by a user during steps S3000 and S4000, the processor 200 may move back to step S1000, obtain the changed state information in real time, and perform following steps sequentially.

The apparatus for establishing a production plan and a method according to embodiments of the present invention have been described above.

The apparatus for establishing a production plan and a method according to embodiments of the present invention may obtain at least one piece of information related to production of a product, create a simulation model to which digital twin technology is applied, and establish a production plan for each unit process for the production of the product based on the at least one piece of information, and may execute a simulation according to the production plan using the simulation model and analyze the result data from the simulation to verify and optimize the production plan. Thus, the present invention provides an apparatus and a method for establishing a production plan with low-cost, high-efficiency, and high-reliability that minimizes an amount of work-in-progress between each process, minimizes a waiting time of the work-in-progress, and minimizes a possibility of quality defect occurrence.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include a hardware device, such as a ROM, a RAM, and a flash memory, specially configured to store and execute program instructions. The program instructions may include not only machine language codes such as those generated by a compiler, but also high-level language codes that can be executed by a computer by using an interpreter or the like.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An apparatus for establishing a plan for producing a product, the apparatus comprising:
at least one processor; and
a memory configured to store at least one instruction executed by the at least one processor,
wherein the at least one instruction includes:
an instruction to obtain at least one piece of information related to a production of the product and to generate a simulation model to which digital twin technology is applied;
an instruction to establish a production plan for each unit process for the production of the product based on the at least one piece of information;
an instruction to perform a simulation according to the production plan using the simulation model; and
an instruction to analyze result data according to the simulation to verify and optimize the production plan.

2. The apparatus of claim 1, wherein the at least one piece of information includes at least one of production data information obtained from a production system of the product, process facility information for manufacturing the product, and logistics facility information for transporting the product.

3. The apparatus of claim 1, wherein the instruction to analyze result data according to the simulation to verify and optimize the production plan includes:
an instruction to analyze a trend of an amount of a work in progress provided for each unit process for manufacturing the product based on the result data;
an instruction to analyze a real-time operation rate of at least one facility for each unit process;
an instruction to analyze a logistics flow of the work in progress in consideration of the real-time operation rate of at least one facility for each unit process; and
an instruction to obtain an optimized production plan based on an analysis result.

4. The apparatus of claim 2, wherein at least one instruction is re-executed based on changed information in an instance that the at least one piece of information is changed by a user.

5. The apparatus of claim 1, wherein the simulation model receives and updates a changed state information in real time in the instance that at least one piece of state information is changed by a user.

6. The apparatus of claim 3, wherein the instruction to obtain the optimized production plan based on the analysis result includes:
an instruction to obtain the optimized production plan in an instance that a simulation result according to the production plan turns out that the production plan minimizes an amount of a work-in-progress required to prepare for an issue of defect occurrence for each unit process and minimizes a waiting time for a process of the work-in-progress.

7. The apparatus of claim 1, wherein the production plan of the product includes a production plan of a battery.

8. A method for establishing a plan for producing a product, the method comprising:
obtaining at least one piece of information related to a production of the product and generating a simulation model to which digital twin technology is applied;
establishing a production plan for each unit process for the production of the product based on the at least one piece of information;
performing a simulation according to the production plan using the simulation model; and
analyzing result data according to the simulation to verify and optimize the production plan.

9. The method of claim 8, wherein the at least one piece of information includes at least one of production data information obtained from a production system of the product, process facility information for manufacturing the product, and logistics facility information for transporting the product.

10. The method of claim 8, wherein the analyzing result data according to the simulation to verify and optimize the production plan includes:
analyzing a trend of an amount of a work in progress provided for each unit process for manufacturing the product based on the result data;
analyzing a real-time operation rate of at least one facility for each unit process;
analyzing a logistics flow of the work in progress in consideration of the real-time operation rate of at least one facility for each unit process; and
obtaining an optimized production plan based on an analysis result.

11. The method of claim 9, wherein the obtaining at least one piece of information, the establishing a production plan, the performing a simulation, and the analyzing simulation result data are re-executed based on changed information in an instance that the at least one piece of information is changed by a user.

12. The method of claim 8, wherein the simulation model receives and updates changed state information in real time in an instance that at least one piece of state information is changed by a user.

13. The method of claim 10, wherein the obtaining the optimized production plan based on the analysis result includes:
obtaining the optimized production plan in an instance that a simulation result according to the production plan turns out that the production plan minimizes an amount of a work-in-progress required to prepare for an issue of defect occurrence for each unit process and minimizes a waiting time for a process of the work-in-progress.

14. The method of claim 8, wherein the production plan of the product includes a production plan of a battery.
